# EUROPEAN PATENT APPLICATION

(11) **EP 4 530 707 A1**
(43) Date of publication of application: **02.04.2025**
(21) Application number: 23306604.2
(22) Date of filing: 26.09.2023
(51) Int. Cl.: G02C 11/00, G06F 1/16

(54) **WEARING DETECTION MODULE TO BE FIXED ON A SPECTACLE FRAME AND PROCESS FOR DETERMINING WHETHER A SPECTACLE FRAME IS WORN**

(71) Applicant: Essilor International, 94220 Charenton-Le-Pont (FR)
(72) Inventor: The designation of the inventor has not yet been filed
(74) Representative: Jacobacci Coralis Harle

(57) **Abstract**

The invention relates to a wearing detection module (140) configured to be fixed on a spectacle frame (120), comprising:
- at least two wearing sensors (142, 143) configured to measure the values of two distinct physical parameters, each parameter being suitable for estimating whether the spectacle frame is worn by a wearer, and
- a processing unit (141) configured to receive said values and to determine whether the spectacle frame is worn as a function of said values.

## Description

### TECHNICAL FIELD OF THE INVENTION

The invention relates to the optical domain.

It more particularly relates to a device and a process for determining whether a wearable device (for instance a spectacle frame) is worn.

The invention is mainly intended for myopic and pre-myopic children wearing myopia control lenses.

### BACKGROUND INFORMATION AND PRIOR ART

More and more electronic spectacle frames are being develop with a great variety of different electronic elements. This is for instance the case for the spectacle frames of myopic wearers.

Indeed, myopia has increased worldwide during recent years and is becoming a serious public problem. For instance, in East Asia, the prevalence can reach 80% of the population.

In this context, many techniques have been developed to stop or slow down the evolution of myopia. Among these techniques, several strategies based on special corrective eyeglasses have been reported as effective.

One of the important parameters to reduce this evolution is to wear the special corrective eyeglasses very regularly. But this regularity is difficult to control in children, especially when they can still see well enough to play without their glasses. Assessing this parameter of wearing time is crucial to predict the outcome of the treatment.

In this context, document US2018081201 discloses a couple of sensors able to determine when the spectacles are being worn by a child. Such sensors form for instance temperature sensing means which are arranged, in use, to measure the temperature in the inside face of the frame relative to the ambient temperature, so as to be able to detect if the frame is worn by the patient.

Nevertheless, the information provided by such a couple of sensors is not reliable enough. Indeed, many false positives can be generated, such as when the user holds the spectacle frame in his hand or when the ambient temperature is high.

Therefore, there is a need for a solution allowing to detect in a more robust manner if the spectacle frame is really worn on the head of the wearer.

### SUMMARY OF THE INVENTION

In this context, the present invention provides a wearing detection module configured to be fixed on a wearable device, comprising:
- at least two wearing sensors configured to measure the values of two distinct physical parameters, each parameter being suitable for estimating whether the wearable device is worn by a wearer, and
- a processing unit configured to (i.e. programmed to) receive said values and to determine whether the wearable device is worn as a function of said values.

Thanks to the invention, even if one sensor gives a non-reliable information, it is possible to verify this information thanks to another sensor so as to have a better idea of whether the wearable device is worn or not.

In other words, the main idea consists in cross-referencing the data issued from various sensors to get as much information as possible about the worn state.

Consequently, it is possible to precisely understand the wearers behaviors.

Other preferred features of this wearing detection module are the following ones:
- the processing unit is configured to determine that the wearable device is worn only if all of said values indicate that the wearable device is worn.
- the processing unit is configured to continuously or regularly activate a first of said at least two wearing sensors and to activate at least another one of said at least two wearing sensors only when said first wearing sensor measures a value that indicates that the wearable device is worn.
- said first sensor is configured to measure the position of a temple of the frame relative to another part of the frame.
- at least one of said wearing sensor is a capacitive sensor configured to measure the contact area or the distance between the wearable device and the wearer.
- at least one of said wearing sensor is an infrared proximity sensor configured to emit light and to detect light reflected back.
- at least one of said wearing sensor is a temperature sensor configured to measure the temperature on an internal face of the wearable device.
- at least one of said wearing sensor is an inclinometer configured to measure the inclination of the wearable device relative to the ground.
- the module comprises a battery configured to power the processing unit and the wearing sensors.
- the values of the distinct physical parameters are stored in a database comprising various values for said physical parameters, these values being able to be classified in at least two clusters, and
- the processing unit determine whether the wearable device is worn or not by determining if the last measured values belong to one or another of said clusters.

The invention also relates to a monitoring equipment comprising:
- a wearable device (for instance the frame of an eyewear that includes at least one lens that is fixed to the frame and that is able to change the natural evolution of an optical deficiency), and
- a wearing detection module according to the invention, fixed on said frame.

In a preferred embodiment, said at least two wearing sensors are embedded in a temple of said frame.

The invention also relates to a process for determining the wearing status of a wearable device, comprising steps of:
- measuring the values of at least two distinct physical parameters, each parameter being suitable for estimating whether the wearable device is being worn by a wearer, and
- determining whether the wearable device is worn as a function of said values.

Other preferred features of this process are the following ones:
- the wearable device is determined as being worn only if all of said values indicate that the wearable device is worn.
- a first of said wearing sensor is continuously or regularly activated and at least another one of said wearing sensors is activated only when said first wearing sensor measures a value that indicates that the wearable device is worn.
- said first wearing sensor is the one that:
   ∘ gives the best estimation of whether the wearable device is worn, or
   ∘ has the smallest power consumption, or
   ∘ has the smallest response time.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic view of a monitoring equipment according to the invention,
- Figure 2 is a graphic illustrating a first embodiment of a process for determining the wearing status of a spectacle frame comprising the monitoring equipment of Figure 1, and
- Figure 3 is a graphic illustrating a second embodiment of this process.

The invention relates to a wearable device including means for determining how long this wearable device has been worn.

This wearable device is preferably a head-mounted device. It is more preferably a spectacle frame.

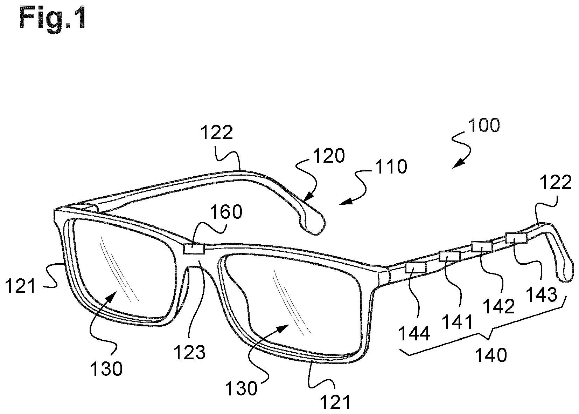

In the embodiment shown in Figure 1, the wearable device belongs to a monitoring equipment 100 that comprises an eyewear having at least one lens designed to change the natural evolution of an optical deficiency.

In the following description, the considered optical deficiency will be myopia but the invention can also apply to other types of visual defects requiring the wearing of an eyewear to prevent a deterioration of vision quality, such as visual fatigue, jet lag, phototoxicity, age related macular degeneration.

The monitoring equipment 100 is a specific combination of the eyewear and a wearing detection module 140 fixed on the eyewear.

According to the invention, this wearing detection module 140 comprises at least two wearing sensors 142, 143 configured to measure the values of two distinct physical parameters (each parameter being suitable for estimating whether the spectacle frame is worn by a wearer) and a processing unit 141 configured to receive said values and to determine whether the eyewear is worn as a function of said values.

As used herein, the term "eyewear" refers generally to items and accessories worn on or over the eyes, which may be for purpose of improving or enhancing visual acuity or preventing myopia.

As shown in Figure 1, the eyewear is a pair of eyeglasses 110 that includes a frame 120 (that forms to the "wearable device"), and two lenses 130 fixed to the frame. In a variant, this eyewear could have a different shape (goggles, etc).

The frame 120 is a structure receiving, retaining, holding, and/or supporting the lenses such that these lenses 130 can be placed in front of respective eyes of a wearer when the pair of eyeglasses 110 is being worn.

As shown in this figure, the frame 120 includes two rims 121 for receiving the lenses 130. Here, each of the two rims 121 is a full rim. According to various embodiments, the rims may also be half rims, or the frame 120 may be without rim (the lenses being screwed onto the frame). Accordingly, the frame 120 may be a full rimmed frame or a semi-rimless frame or a rimless frame.

The frame 120 includes a bridge 123, situated above the nose of the wearer when the pair of eyeglasses 110 is being worn.

The frame 120 also includes a pair of frame temples 122. The pair of frame temples 122 constitutes a pair of elongated side pieces of the frame 120, rested on the ears of the wearer when the pair of eyeglasses 110 is being worn. Each temple 122 is articulated to the corresponding rim by a hinge.

The lenses 130 are designed to modify the natural evolution of an optical deficiency, here myopia.

Each lens 130 includes a first optical refraction area for providing correct vision to the wearer at a determined distance, and a second optical refraction area for changing the natural evolution of the optical deficiency.

The first optical refraction consists, for instance, in a spherical power for providing correct far vision to the wearer (for looking at objects situated at more than 6 meters). This first optical refraction can also include a cylindrical and/or a prismatic power.

The second optical refraction provides an additional optical feature. This refraction is specifically designed to prevent or to limit or to stop the evolution of myopia.

There are many types of lenses able to slow or stop myopia progression: this second optical refraction can be of these any type. It can be for instance selected among:
- optical elements generating an eye elongation signal in front of the wearer's retina when the wearer wear said pair of eyeglasses, or
- an addition of optical power and/or of prismatic optical power, or
- additional positive power in the lens periphery, or
- scattering elements in the lens. The scattering elements could be either disposed on the lens surface or disposed in the lens.

Here, the used myopia control lenses 130 contain preferably a plurality of at least three optical elements (lenslets). Such lenses are described for instance in document WO2019166654.Such a lens is intended to be worn in front of an eye of the wearer and comprises:
- a refraction area having a first refractive power based on a prescription for correcting an abnormal refraction of said eye, and
- a plurality of at least three optical elements, at least one optical element having an optical function of not focusing an image on the retina of the eye so as to slow down the progression of the abnormal refraction of the eye.

In a variant, the lens 130 comprises:
- a first refraction area having a first refractive power based on a prescription for correcting an abnormal refraction of an eye; and
- second refraction areas having a refractive power different from the first refractive power, and having a function of focusing an image on a position other than a retina of the eye so as to suppress a progress of the abnormal refraction of the eye,
the second refraction areas are formed as a plurality of respectively independent island-shaped areas in the vicinity of a center part of a lens, and the first refraction area is formed as the area other than the areas formed as the second refraction areas.

In another variant, the lens 130 comprises:
- a central zone providing a first optical refraction for substantially correcting myopia associated with the foveal region of the wear's eye; and
- a peripheral zone surrounding the central zone, the peripheral zone providing a second optical correction for substantially correcting myopic or hyperopia associated with a peripheral region of the retina of the wearer's eye.

The wearing detection module 140 is designed to determine if the pair of eyeglasses 110 is being worn by the wearer or not.

This module is preferably embedded in the frame. It is for instance molded into a part of the frame 120 (for instance in one of its temples).

In a variant, this wearing detection module 140 may be attached to the frame. It could be permanently attached to the frame, for instance by means of glue. Or it could be removably attached to the frame, for example by means of snap-fastening means or by Velcro°.

This module is designed to frequently detect a wearing state (a state "worn" or "not worn").

As explained above, it comprises at least two wearing sensors 141, 142 each able to determine a "wearing state approximation". The "wearing state" is deduced from all the determined wearing state approximation.

Each wearing sensor can be of any kind, but the two sensors do not measure the same type of parameter. In other words, the sensors are designed to perform different measurement processes so as to differently determine the wearing state approximations.

In a first example, one of the wearing sensors measures a parameter indicative of the distance between the spectacle frame (the temple) and the wearer.

This sensor is for instance a light sensor, for example an infrared proximity sensor configured to emit light and to detect the reflected light. An infrared proximity sensor placed on the temple of the spectacle frame can indicate if the pair of eyeglasses 110 is probably worn or not. If not, no light is reflected.

In a variant, the sensor is a capacitive sensor, configured to measure the contact area or the distance between the spectacle frame and the wearer.

In a second example, one of the wearing sensors measures a temperature or a temperature difference.

For example, the sensor can comprise two cells suitable for measuring the temperature in two opposite directions (inside the temple and outside the temple). The detection of a difference of temperature between the two cells is a signature of the fact that the pair of eyeglasses 110 is probably worn.

In a third example, one of the wearing sensors is a resistive sensor configured to measure biological and/or physiological parameters of the wearer. For example, the resistive sensor may be a heart rate sensor capable of detecting heart beats in a part of a spectacle frame element close to the skin of the wearer. Such a resistive sensor has the advantage to be specific by discriminating living things and objects. The heart rate sensor is preferably arranged on the temple, at the extremity of the tip of the temple facing a temporal bone of the wearer or on the bridge.

In a fourth example, one of the wearing sensors is a motion sensor, for example an accelerometer adapted to determine if the frame moves or not. The detection of a constant movement is a signature of the fact that the pair of eyeglasses 110 is probably worn.

In a variant, this is an inclinometer that is able to determine the tilt of the frame relative to the ground so as to determine if this tilt shows that the pair of eyeglasses 110 is probably placed on a furniture or if it is probably worn.

In a fifth example, one of the wearing sensors is a pressure sensor adapted to determine if the frame temples bear against the wearer's head or not.

In a sixth example, one of the wearing sensors is a pH sensor adapted to determine if the frame is in contact with the wearer's head or not.

In a seventh example, one of the wearing sensors is a capacitive sensor adapted to detect the wearer's head.

Such a sensor is mainly composed of 2 parts, the electronic components and a copper layout laying down onto a semi-rigid tab. The electronic components are mostly used to manage the analog signal through the copper area and the digital communication with the processing unit. The copper layout acts as an antenna: it sends and receives an electrical field that is modulated by the proximity of the target (here, the wearer's head). In situation, the tab is integrated into the temple and the rigid part of the sensor is glued to the inside of the temple.

In an eighth example, one of the wearing sensors is adapted to detect whether the temples are in a closed state (against the rims of the frame) or in an opened state. Such a sensor will be called hereinafter as an "opening/closing sensor".

Two embodiments can be contemplated to design such a sensor.

In a first embodiment, the sensor is positioned on a face of an electronic board facing a magnet located into the hinge of the corresponding temple. Both parts are designed in such a way that an opening detection by the sensor occurs at temple opening mid race and the opposite way for closure detection.

In a second embodiment, the electronic board can be located near the center of the temple and the magnet can either be located onto the opposite temple or into a rim or into the nose bridge 123.

In a first embodiment shown in Figure 1, the pair of eyeglasses 110 comprises exactly two sensors.

In this first embodiment, a first of the sensors 142 is an opening/closing sensor, and the second sensor 143 comprises two cells suitable for measuring the temperature in two opposite directions.

In a second embodiment, the pair of eyeglasses 110 comprises exactly three sensors.

In this second embodiment, a first sensor is an opening/closing sensor, the second sensor is a capacitive sensor, and the third sensor is an inclinometer.

In both embodiments, the frame 120 is preferentially fitted with means for accumulating or generating an electrical energy to supply the processing unit 141 with an electrical current.

These means comprise here a battery 144. The battery is preferably chosen to have a capacity allowing at least 6 months of battery life.

In a variant, these means can comprise an energy harvesting transducer that converts some form of ambient energy into electricity. This transducer can for instance generate an electrical current from movements of the frame or from sun light.

The processing unit 141 is programmed to:
- acquire a datum determined by each wearing sensor 142, 143,
- deduce therefrom whether the spectacle frame is worn.

This enables to determine the length of time the wearer has worn the pair of eyeglasses 110 during a predetermined period, and, if any, to compare said length of time with at least a threshold to determine a level of efficiency of the optical deficiency treatment.

To this end, the processing unit 141 comprises a central processing unit (CPU), a memory and input/output components.

Thanks to its memory, the processing unit stores information used in the process described below. It particularly stores a computer application, consisting of computer programs comprising instructions, the execution of which allowing the implementation by the processing unit 141 of the method described below.

Thanks to its input/output components, the processing unit 141 can receive data measured by the wearing sensors 142, 143.

It can also receive other information from other sensors.

In the embodiment shown in Figure 1, this processing unit 141 is a microcontroller embedded in the pair of eyeglasses 110. In a variant, this processing unit could be remoted from the pair of eyeglasses 110 and formed by a controller of a computer or of a mobile device such as a smartphone.

Here, the frame 120 also comprises a communication unit 160 suitable to establish a radio contact with an informatics device (computer, smartphone, watch...). The processing unit 141 can therefore send information (for instance the length of time), so that this information can be processed by the informatics device.

This communication unit 160 is preferably a passive or active RFID chip. Such a chip does not require any battery to operate and can be scanned by a reader at a distance of 15 meters away from the scanner. In a variant, other technologies could be used (Bluetooth^{®}, WIFI...).

Here, the frame also comprises a clock (a Real Time Clock) embedded in the frame 120 and that is able to date the measure and a memory to memorize the last measures.

Consequently, the processing unit 141 can evaluate if the pair of eyeglasses 110 is worn or not and a simple log can register both the worn state and the corresponding time.

The process performed by this processing unit 141 to determine whether the pair of eyeglasses 110 is worn is executed in loops, at determined time intervals (also called "sampling period").

The time interval is preferably the same from a loop to another. It is advantageously greater than 10 minutes, to save electrical power. Here, a loop is done every 15 minutes.

To achieve this same aim, the execution of the process may be limited to a predetermined period (for instance from 6am to 11pm). A child is indeed considered as sleeping between 11pm and 6am. During the night, the processing unit 150 is consequently on standby.

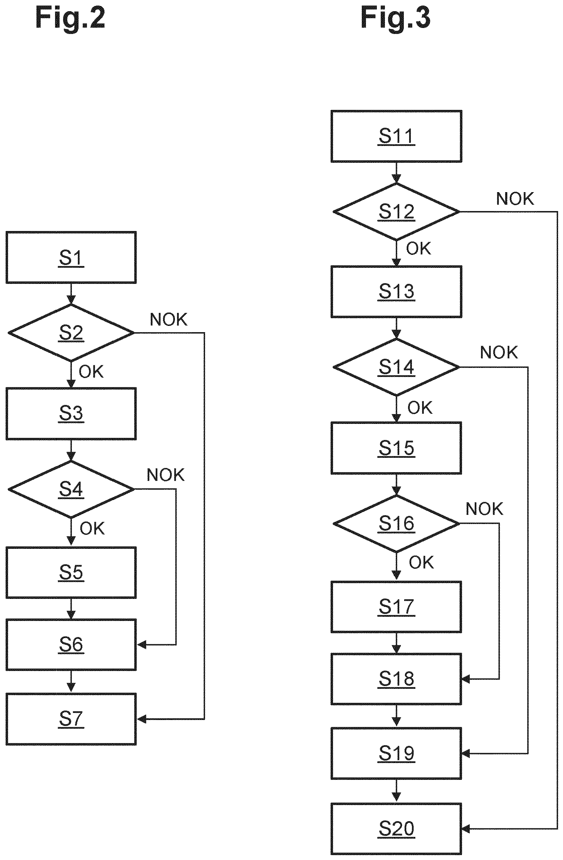

The process is carried out step by step, as shown in Figures 2 and 3.

Figure 2 shows a first example of this process, performed by means of the first embodiment of eyewear (the one shown in Figure 1). Figure 3 shows a second example of this process, performed by means of the second embodiment of eyewear.

In both examples, the first step S1, S11 consists in waking up the first sensor and measuring a first datum by means of this first sensor to be able to deduce therefrom a first wearing state approximation.

In both embodiments, the first sensor is of the opening/closing kind for the following reasons.

First, such a sensor usually gives the best estimation of whether the pair of eyeglasses 110 is worn. Second, this is among the sensors embedded in the frame 120 the one that has the smallest power consumption and the smallest response time. For these reasons, using as first sensor an opening/closing sensor is preferred.

But even such a sensor can give false results (for instance if the wearer places its pair of eyeglasses 110 with the temples opened on a furniture). That is why other sensors are also used.

In both examples, the second step S2, S12 consists in determining the first wearing state approximation ("a priori worn" or "not worn") on the basis of the measured first datum, to control whether the pair of eyeglasses 110 is a priori worn or not.

Here, if the measured first datum reveals that the temple 122 is closed, the process ends. In this case, it is indeed quite clear that the pair of eyeglasses 110 is not worn if the temples are closed.

Before stopping the process, during a final step S7, S20, the first sensor is shut down.

Otherwise, if the measured first datum reveals that the temple 122 is opened, the process continues in a third step S3, S13. As explained above, it is indeed not sure at this step if the pair of eyeglasses 110 is being worn.

This third step differs in the first example of Figure 2 and in the second example of Figure 3. First, we will entirely describe the first example, the second one being described after.

During the third step S3, the processing unit 141 wakes up the second sensor 143 and acquires a second datum by means of this second sensor to be able to deduce therefrom a second wearing state approximation.

Here, this second sensor 143 is activated only when the first wearing state approximation is "a priori worn". This avoids waking up this second sensor 143 if it is not necessary, to prevent unnecessary energy loss.

In the first embodiment, the second sensor 143 comprises two cells suitable for measuring the temperature in two opposite directions.

Therefore, at this step, the processing unit 141 acquires an inside temperature and an outside temperature.

Then, during a fourth step S4, the processing unit 141 determines the second wearing state approximation ("a posteriori worn" or "not worn") on the basis of the measured temperatures.

If the difference between these temperatures is above a predetermined threshold (for instance 3 degrees, but this threshold may depend on the outside temperature), it deduces that the pair of eyeglasses 110 is "a posteriori worn". Else, it deduces that it is "not worn".

Then, if the difference between these temperatures reveals that the frame 120 is not worn, the process ends. Before ending, during final steps S6 and S7, both sensors 142, 143 are shut down.

Otherwise, if this difference reveals that the pair of eyeglasses 110 is currently worn, the process continues in a fifth step S5.

This fifth step S5 here consists in incrementing a wearing time counter when both sensors indicate that the pair of eyeglasses 110 is worn by the wearer. After, steps S6 and S7 are performed.

On the basis of this counter, it will be possible to perform many functions.

For instance, the length of time the pair of eyeglasses 110 has been worn during a predetermined period can be calculated and sent to the informatics device for next uses.

To this end, at the end of each day, it is possible to acquire the value of this counter, and to multiplicate this value by the time interval (here 15 minutes) in order to obtain the length of time the pair of eyeglasses 110 has been worn during the day, in minutes.

In a variant, the processing unit can also activate other functions, for instance electrochromics driving function, efocus driving function... Here, the idea is to check if the wearer is wearing his glasses and to activate this function only in this case.

Then, the counter is reset (before the beginning of the following day).

As explained above, in the second example of Figure 3, if the measured first datum reveals that the temple 122 is opened, the process continues with a step S13.

During this step S13, the processing unit 141 wakes up the second sensor and acquires a second datum by means of this second sensor in order to be able to deduce therefrom a second wearing state approximation.

In this second embodiment, the second sensor is a capacitive sensor able to determine a distance between the spectacle frame temple and the wearer (if any).

Then, during a step S14, the processing unit 141 determines the second wearing state approximation.

To this end, if the distance is "unknown" or above a predetermined threshold (for instance 3 centimeters), it deduces that the pair of eyeglasses 110 is not worn. Else, it deduces that it is probably worn.

Then, if the distance reveals that the frame 120 is not worn, the process ends. Before ending, during final steps S19 and S20, both sensors are shut down.

Otherwise, if this difference reveals that the pair of eyeglasses 110 is probably worn, the process continues with a step S15.

During this step S15, the processing unit 141 wakes up the third sensor and acquires a third datum by means of this third sensor so as to be able to deduce therefrom a third wearing state approximation.

In this second embodiment, the third sensor is an inclinometer able to determine the tilt angle of the temple 120 relative to the ground.

Then, during a step S16, the processing unit 141 determines this third wearing state approximation.

To this end, if the angle is comprised into a valid range (for instance -5 to 5 degrees), it deduces that the pair of eyeglasses 110 is not worn. Else, it deduces that it is worn.

This angle provides a reliable information since we know, at this step, that the temples are opened. Indeed, in this case, if the pair of eyeglasses 110 is placed on a furniture, this angle is necessarily comprised into the valid range.

Then, if the angle reveals that the frame 120 is not worn, the process ends. Before ending, final steps S18, S19 and S20 are performed to shut down the three sensors.

Otherwise, if this angle reveals that the pair of eyeglasses 110 is worn, the process continues with a step S17.

This step S17 is identical to said step S5: it consists in incrementing a wearing time counter.

Then, the steps S18, S19 and S20 are performed.

At this step of the description, we can note that the use of different parameters measured by sensors of different kinds avoids false positive errors (means detecting worn state whilst the equipment is not worn) and false negative errors (means detecting not-worn state whilst the equipment is worn).

For instance, the wearer can forget to close the temples or can place the frame on a hot support but even in these conditions the used process provides a reliable information.

The present invention is in no way limited to the embodiments described and shown.

For instance, the sequence of activation of the sensors may not be frozen but it may depend on the history of the previous performed loops. For instance, if two successive loops show that the first datum (measured by the opening/closing sensor) is probably false, the following loop may consider as first sensor another one (the temperature sensor for instance). This avoid waking up too regularly the sensors when it is not necessary (for instance when the temple is opened and the pair of eyeglasses 110 is placed on a furniture).

In another variant, the processing unit can comprise a memory able to store the last states indicated by the sensors during previous loops. Then, according to these last states, the processing unit can modify not only the sequence of activation of the sensors but also other parameters.

For instance, it can modify the sampling period so as to reduce the energy consumption of the device or to obtain more detailed results. For example, in the second embodiment, if the third sensor is the only one that reveals that the frame is not worn, the sampling period can be reduced to check this result.

In another example, the processing unit can weight the wearing state approximation determined by each sensor.

The application of the pair of eyeglasses 110 in the above embodiment is to detect the worn time for reducing myopia evolution. Other applications are possible, for instance for amblyopia risk prevention.

In another variant, the wearable device fitted with the wearing detection module could be of any other kind. It could be for instance a shoe for a person having legs of different lengths.

In another embodiment, the last data measured by the various sensors fitted in the pair of eyeglasses 110 can be analyzed relative to the old ones stored in the memory in order to determine whether the pair of eyeglasses 110 is currently worn or not. We can now describe this embodiment.

In this embodiment, the first sensor is preferably a capacitive sensor configured to measure the distance between the spectacle frame and the wearer. The second sensor can be of any kind. It is for instance a temperature sensor placed on the inside face of the temple 120.

The idea consists in using machine learning to determine the worn state.

To this end, the measurements are stored in the informatics memory and a cluster analysis is performed. Such an analysis identifies commonalities in the stored data and reacts (when new data are measured by the sensors) based on the presence or absence of such commonalities in these new data.

This analysis is made in two-dimensions when only two sensors are fitted in the pair of eyeglasses 110. It can be performed in a higher dimension when more than two sensors are used.

The algorithm here used is well known and named "k-means clustering".

This is a method of vector quantization that aims to partition n observations (that is to say n couples of data measured by the two sensors) into k clusters in which each observation belongs to the cluster with the nearest mean. It minimizes within-cluster variances and maximize without-cluster variances.

Here, the number k is preferably equal to two. Consequently, one cluster is associated to the worn state when the other is associated to the non-worn state. But in a variant, as it will be explained after, k may be greater than two.

In practice, each time a couple of data is measured by the processing unit, the latter memorizes these data. Consequently, little to little, the processing unit creates a database having two fields to store the data measured by the two sensors. In a preferred embodiment, this database may have a third field to store the worn state (yes or not). This worn state can be determined for instance thanks to one of the methods disclosed above.

Then, the k-means clustering algorithm is performed on the two first fields, with only two clusters (k=2). By considering that each couple of measured data form a point in a 2D representation, this algorithm enables to distinguish two sets of points (the clusters), one set corresponding to data measured when the pair of eyeglasses 110 was worn and another set corresponding to data measured when the pair of eyeglasses 110 was not worn.

To associate one cluster with one of the worn states, it is possible to use the third field (to this end, it can be considered that the cluster for which the greatest number of points are tagged "yes" in the third field corresponds to the cluster "worn state").

As explained above, a greater number of clusters can be used in order to distinguish other states than "worn" and "not worn".

For instance, with k equal to three, the third cluster can be associated to a "sliding state", that is to say to a state where the pair of eyeglasses 110 is worn but has slipped along the nose of the wearer (in a bad position to be corrected).

The use of such an algorithm to determine the worn state has many advantages. The first one is that the results do not depend on the initial calibration of the sensors, on possible mechanical problems that can occur (for example, addition of an offset due to the displacement of the sensor), and on possible variations (during winter, the temperature gap inside and outside the pair of eyeglasses 110 is generally greater than during summer). Consequently, this solution enables to correct in real time the results. Moreover, if the quality of clustering has to be improved, it is possible to refresh the database by removing old data in order to run the algorithm on the basis only of the most recent data. This can be carried out without human intervention.

Moreover, in the variant where k=3, it is possible to detect changes in the way of wearing the frame and the wearer can be warned if there is a difference in the resting worn position. This is especially the case when the wearer is wearing progressive lenses because the height of the pupil is an important parameter of comfort and good vision.

In a variant, this method can also be used for the detection of whether the pair of eyeglasses 110 is situated indoor or outdoor (if one of the sensors is an ambient light sensor).

In another variant, other algorithms could be used instead of the k-means method. For instance, the Gaussian mixture model can be used. We could also use a neuronal network algorithm trained on the basis of a training database. In a preferred embodiment, the used method is the one that gives the best results, said method depending on the kind of sensors embedded in the frame.

## Claims

1. A wearing detection module (140) configured to be fixed on a wearable device (120), comprising:
- at least two wearing sensors (142, 143) configured to measure the values of two distinct physical parameters, each parameter being suitable for estimating whether the wearable device (120) is worn by a wearer, and
- a processing unit (141) programmed to receive said values and to determine whether the wearable device (120) is worn or not, as a function of said values.

2. A wearing detection module (140) according to claim 1, wherein the processing unit (141) is configured to determine that the wearable device (120) is worn only if all of said values indicate that the wearable device (120) is worn.

3. A wearing detection module (140) according to one of claims 1 and 2, wherein the processing unit (141) is configured to continuously or regularly activate a first of said at least two wearing sensors (142) and to activate at least another one of said at least two wearing sensors (143) only when said first wearing sensor measures a value that indicates that the wearable device (120) is worn.

4. A wearing detection module (140) according to claim 3, wherein said wearable device (120) is a spectacle frame and wherein said first sensor (142) is configured to measure the position of a temple of the frame relative to another part of the frame.

5. A wearing detection module (140) according to any one of claims 1 to 4, wherein at least one of said wearing sensor (143) is a capacitive sensor configured to measure the contact area or the distance between the wearable device (120) and the wearer.

6. A wearing detection module (140) according to any one of claims 1 to 5, wherein at least one of said wearing sensor (142, 143) is an infrared proximity sensor configured to emit light and to detect light reflected back.

7. A wearing detection module (140) according to any one of claims 1 to 6, wherein at least one of said wearing sensor (142, 143) is a temperature sensor configured to measure the temperature on an internal face of the wearable device (120).

8. A wearing detection module (140) according to any one of claims 1 to 6, wherein at least one of said wearing sensor (142, 143) is an inclinometer configured to measure the inclination of the wearable device (120) relative to the ground.

9. A wearing detection module (140) according to any one of claims 1 to 8, comprising a battery (144) configured to power the processing (141) unit and the wearing sensors (142, 143).

10. A wearing detection module (140) according to any one of claims 1 to 9, wherein the values of the distinct physical parameters are stored in a database comprising various values for said physical parameters, these values being able to be classified in at least two clusters, and wherein the processing unit (141) determine whether the wearable device (120) is worn or not by determining if the last measured values belong to one or another of said clusters.

11. A monitoring equipment (100) comprising:
- a wearable device (120), and
- a wearing detection module (140) according to any one of the preceding claims, fixed on said frame.

12. The monitoring equipment (100) according to claim 11, wherein said wearable device (120) is a frame of an eyewear (110) that includes at least one lens (130) that is fixed to the frame and that is able to change the natural evolution of an optical deficiency.

13. The monitoring equipment (100) according to claim 12, wherein said at least two wearing sensors (142, 143) are embedded in a temple (122) of said frame.

14. Process for determining the wearing status of a wearable device (120), comprising steps of:
- measuring the values of at least two distinct physical parameters, each parameter being suitable for estimating whether the wearable device (120) is being worn by a wearer, and
- determining whether the wearable device (120) is worn as a function of said values.

15. Process according to claim 14, wherein the wearable device (120) is determined as being worn only if all of said values indicate that the wearable device (120) is worn.

16. Process according to any one of claims 14 to 15, wherein a first of said wearing sensor (142) is continuously or regularly activated and at least another one of said wearing sensors (143) is activated only when said first wearing sensor (142) measures a value that indicates that the wearable device (120) is worn.

17. Process according to any one of claims 14 to 16, wherein said first wearing sensor (141) is the one that:
- gives the best estimation of whether the wearable device (120) is worn, or
- has the smallest power consumption, or
- has the smallest response time.
